# EUROPÄISCHE PATENTANMELDUNG

(11) **EP 0 559 604 A1**
(43) Veröffentlichungstag der Anmeldung: **08.09.1993**
(21) Anmeldenummer: 93810061.7
(22) Anmeldetag: 01.02.1993
(51) Int. Cl.: B65G 1/137, B65G 1/04

(54) **Lager- und Kommissionieranlage**

(30) Priorität: 02.03.1992 CH 640/92
(71) Anmelder: DREIER-ROBOT AG, CH-4253 Liesberg 1 (CH)
(72) Erfinder: Deier, Erich, CH-4245 Kleinlützel (CH)
(74) Vertreter: Rottmann, Maximilian R.

(57) **Zusammenfassung**

Die Lageranlage umfasst eine Vielzahl von Abstellplätzen zur Aufnahme von Lagereinheiten (4) und verfügt über Transporteinrichtungen (6) zum Ein- und Auslagern der Lagereinheiten. Diese Lageranlage ist aufgeteilt in ein Hauptlager (8) zur Aufnahme von das ganze Artikelsortiment umfassenden artikelreinen Lagereinheiten (4) und in wenigstens ein Kommissionierlager (9) zur Aufnahme von aus dem Hauptlager (8) zu entnehmenden Lagereinheiten (4), deren Artikel für bevorstehende Kommissionierungen bestimmt sind. Dem Kommissionierlager (9) ist eine Einrichtung zur Bildung von Versandeinheiten (15) zugeordnet, insbesondere in Form einer Kommissionierzelle (10) mit einem Kommissionierroboter (11).

Dieses Konzept der Lageranlage ermöglicht es, auf einfache und platzsparende weise und mit geringen Materialbewegungen Versandeinheiten zu bilden, und schafft die Voraussetzungen für ein vollautomatisches Kommissionieren mit wirtschaftlich tragbarem Aufwand.

## Beschreibung

Die vorliegende Erfindung betrifft eine Lageranlage mit einer Vielzahl von Abstellplätzen zur Aufnahme von Lagereinheiten und mit Transporteinrichtungen zum Ein- und Auslagern der Lagereinheiten. Solche Lageranlagen sind in den meisten Fällen in Form von Regallagern, insbesondere Hochregallagern, ausgeführt.

In Verteilzentren sind Lageranlagen dieser Art oft mit einer Kommisionieranlage betrieblich verbunden, in welcher aus verschiedenen Artikeln, welche aus artikelreinen Lagereinheiten stammen, Versandeinheiten gebildet werden.

Unter einer Lager- bzw. Versandeinheit wird eine Menge von Artikeln z.B. in Form von Packstücken verstanden, welche in einem bestimmten Stauraum gestapelt sind, wobei der Stauraum in der Regel durch einen Ladungsträger, z.B. eine Palette, gegeben ist. In der nachfolgenden Beschreibung ist vorwiegend von Paletten, d.h. von Lager- bzw. Versandpaletten die Rede, obwohl ohne weiteres auch andere Ladungsträger angewandt werden können. Beispielsweise können auch die Ladungsträger der Lagereinheiten von denjenigen der Versandeinheiten verschieden sein. Bei den sogenannten artikelreinen Lagereinheiten sind die Ladungsträger mit jeweils unter sich gleichen Artikeln beladen.

In manchen Produktions- und Distributionsbetrieben ist das Kommissionieren eine aufwendige und kostenintensive Arbeit, und die Automatisierung der damit verbundenen Aufgaben ist mit bekannten Lösungen in vielen Fällen nicht wirtschaftlich realisierbar.

Für das vollautomatische Bilden von Versandpaletten sind beispielsweise Lösungen bekannt, bei welchen die artikelreinen Lagerpaletten aus einem Palettenlager über Föderanlagen oder Flurförderfahrzeuge einer vom Palettenlager baulich getrennten Kommissionieranlage zugeführt werden. Bei einer dieser Lösungen verfügt die Kommissionieranlage über einen Flächenportalroboter mit einem Aktionsbereich, welcher eine beschränkte Anzahl von Abstellplätzen für mehrere Lagerpaletten und eine oder mehrere Versandpaletten umfasst. Eine andere Lösung besteht darin, dass ein Kommissionierroboter mit einem automatisch verfahrbaren Untersatz für das Zubringen des Roboters und einer Versandpalette zu den einzelnen Lagerpaletten vorgesehen ist.

Der Nachteil solcher Lösungen besteht darin, dass für die gesamte Lager- und Kommissionieranlage eine grosse Stellfläche beansprucht wird und dass grosse Mengen von Lagerpaletten zwischen der Lageranlage und der Kommissionieranlage bewegt werden müssen. Diese Materialbewegungen erfordern ebenfalls viel Fläche, und die eingesetzten Flurförderfahrzeuge oder Förderanlagen verursachen grosse Kosten.

Der Versuch, die Artikel in einem Regallager direkt von am Lagerort verbleibenden Lagerpaletten vollautomatisch auf Versandpaletten zu kommissionieren und dadurch die nachteiligen Materialbewegungen ausserhalb der Lageranlage zu vermeiden, scheitert an dem Umstand, dass im Regallager eine möglichst hohe Volumenausnutzung angestrebt wird und ein automatisches Greifen der Artikel von den eingelagerten Lagerpaletten und Umsetzen auf Versandpaletten technisch nur mit sehr hohem Aufwand möglich ist. Da sich in der Regel eine grosse Anzahl unterschiedlicher artikelreiner Lagerpaletten in der Lageranlage befindet, die Versandpaletten aber nur mit einer geringen Anzahl unterschiedlicher Artikel beladen werden, war unter den gegebenen Umständen eine Automatisierung der Kommissionierung direkt im Regallager aus technischen und wirtschaftlichen Gründen mit den bekannten Lösungen bisher nicht möglich.

Aufgabe der Erfindung ist es, eine Lageranlage der eingangs genannten Art zu schaffen, welche es ermöglicht, auf einfache und platzsparende Weise und mit geringen Materialbewegungen Versandeinheiten zu bilden und welche die Voraussetzungen für ein vollautomatisches Kommissionieren mit wirtschaftlich tragbarem Aufwand schafft.

Diese Aufgabe wird erfindungsgemäss dadurch gelöst, dass die Lageranlage aufgeteilt ist in ein Hauptlager zur Aufnahme von das ganze Artikelsortiment umfassenden artikelreinen Lagereinheiten und in wenigstens ein Kommissionierlager zur Aufnahme von aus dem Hauptlager zu entnehmenden Lagereinheiten, deren Artikel für bevorstehende Kommissionierungen bestimmt sind. Auf diese Weise ergibt sich die Möglichkeit, das einen Teil der Lageranlage bildende Kommissionierlager wenigstens teilweise als Bereitstellungsraum für die an den Kommissionierungen jeweils beteiligten Lagereinheiten auszubauen und dadurch einen wesentlichen Teil der Materialbewegungen auf den Bereich der Lageranlage zu beschränken. Es können auch mehrere Kommissionierlager vorgesehen sein, welche auf verschiedene Orte der Lageranlage verteilt sind.

Die erfindungsgemässe Lösung kann in Verbindung mit allen bekannten Palettenregallagern mit manueller, halb- oder vollautomatischer Regalbedienung durch Stapler oder Regalbediengeräte, und auch in Verbindung mit Paletteneinschub- oder Durchlauflagern angewandt werden. Auch bestehende Lageranlagen können nachträglich in ein Hauptlager und ein Kommissionierlager im Sinne der erfindungsgemässen Lösung aufgeteilt werden.

Eine bevorzugte Ausführungsform der erfindungsgemässen Lageranlage besteht darin, dass jedem Kommissionierlager eine Einrichtung zur Bildung von Versandeinheiten zugeordnet ist. Mit Vorteil weist diese Einrichtung wenigstens eine selbsttätig arbeitende Kommissionierzelle auf, welche Abstellplätze zur Aufnahme wenigstens einer Lagereinheit und zur Bildung wenigstens einer Versandeinheit aufweist und in welcher mit Hilfe eines Kommissionierroboters den zugeführten Lagereinheiten Artikel entnommen und zur Bildung von Versandeinheiten zusammengetragen werden. Dabei kann die Kommissionierzelle in das Kommissionierlager eingebaut sein und im weiteren wenigstens einen Teil der Abstellplätze des Kommissionierlagers umfassen. Vorzugsweise ist als Kommissionsroboter ein Portalroboter, insbesondere ein Flächenportalroboter vorgesehen.

Gemäss einer Weiterbildung der Erfindung wird vorgeschlagen, dass das Hauptlager und das Kommisionierlager eine bauliche und betriebliche Einheit bilden. Die bauliche Einheit lässt sich im Falle eines Hochregallagers beispielsweise dadurch erzielen, dass das Lagerregal des Kommissionierlagers in das Lagerregal des Hauptlagers integriert ist. Vorzugsweise ist dabei das Kommissionierlager und insbesondere eine damit verbundene Kommissionierzelle im unteren Lagerbereich der Lageranlage angeordnet.

Durch die Anordnung des Kommissionierlagers im unteren Lagerbereich einer Regallageranlage ergibt sich im Falle eines Portalroboters, insbesondere eines Flächenportalroboters als Kommissionierroboter die Möglichkeit, das Gerüst des Regallagers im Bereich der Kommissionierzelle auf dem Stützportal des Portalroboters abzustützen, so dass für die Kommissionieranlage sehr wenig Lagervolumen beansprucht wird. Diese Ausführungsform ist praktisch bei jeder Art von Regallagern anwendbar. Ferner hat die Anordnung der Kommissionierzelle im unteren Lagerbereich den Vorteil, dass alle Sicherheitsanforderungen zum Schutz von Personen und Anlageteilen mit einfachen Massnahmen erfüllt werden können, ohne dass der Zugang für Unterhaltsarbeiten an der Anlage eingeschränkt wird.

Im Gegensatz zu den bekannten Lösungen mit einer von der Lageranlage baulich getrennten Kommissionieranlage befindet sich also bei dem vorgeschlagenen Konzept die Kommissionieranlage innerhalb der Lageranlage. Auf diese Weise lässt sich die volle Raumhöhe über der Kommisionieranlage, welche an sich nur einen Bruchteil der im allgemeinen verfügbaren Raumhöhe beansprucht, als Lagerraum optimal ausnutzen. Diese Lösung benötigt damit weniger Stellfläche und führt zu einer weiteren Verkürzung der Transportwege. Dadurch lassen sich Platz- und Transportkosten in grösserem Umfang sparen. Ausserdem schafft diese Lösung die Möglichkeit, auf verhältnismässig einfache Weise eine vollautomatische Kommissionierung zu realisieren.

Zur Erreichung der betrieblichen Einheit können für das Hauptlager, das Kommissionierlager und die Kommissionierzelle gemeinsame Transporteinrichtungen zum Ein- und Auslagern der Lagereinheiten, insbesondere selbsttätig arbeitende Regalbediengeräte zum Einsatz kommen. Auf diese Weise ist eine vollautomatische Kommissionierung innerhalb der Lageranlage möglich. Zu diesem Zweck kann eine gemeinsame Steuerzentrale für den Betrieb aller vorhandenen Regalbediengeräte und Kommissionierroboter vorgesehen sein.

Zweckmässigerweise sind die in der Kommissionierzelle vorhandenen Abstellplätze für die Lager- und Versandeinheiten im Arbeitsbereich des Regalbediengeräts angeordnet. Mit Rücksicht auf eine einfache Steuerung ist dabei die Anordnung vorzugsweise so getroffen, dass der Bewegungsbereich des Kommissionierroboters von dem Bewegungsbereich des Regalbediengeräts getrennt ist. Eine solche Anordnung ist bei der Verwendung eines Flächenportalroboters ohne Steuerungsprobleme rein baulich lösbar.

Die mit einer derartigen Ausführungsform der erfindungsgemässen Lageranlage erzielten Vorteile bestehen insbesondere darin, dass mit dem Regalbediengerät artikelreine Lagerpaletten direkt in den Greifbereich eines Kommissionierroboters gesetzt werden können. Der Kommissionierroboter kann ohne zusätzliche Materialbewegungen von mehreren artikelreinen Lagerpaletten automatisch eine oder mehrere Versandpaletten bilden. Dieses Ziel wird aufgrund der Anordnung des oder der Kommissionierroboter innerhalb des Regal-lagers erreicht. Ein als Flächenportalroboter ausgebildeter Kommissionierroboter kann oberhalb der Lagerpaletten Artikel greifen und auf eine oder mehrere danebenstehende Versandpaletten umsetzen. Die Lagerpaletten werden nach Bedarf mit dem Lagerbediengerät aus dem Regallager auf Abstellplätze im Aktionsbereich des Kommissionierroboters gesetzt. Leerpaletten, welche als Versandpaletten benutzt werden, können ebenfalls mit dem Regalbediengerät auf beliebig viele Kommissionierplätze gesetzt werden. Zu diesem Zweck weist z.B. das Kommissionierlager vorzugsweise einen Lagerplatz für leere, zur Bildung von Versandeinheiten bestimmte Ladungsträger, z.B. Paletten, auf. Andererseits können die Leerpaletten auch von der Regalaussenseite der Kommissionierzelle zugeführt werden.

Die Bildung der Versandpaletten erfolgt durch den Kommissionierroboter, dessen Umsetzbewegungen durch ein Kommissionierprogramm gesteuert werden und welcher dabei mit entsprechenden Greifern die Artikel in der passenden Reihenfolge und in der richtigen Menge von den artikelreinen Lagerpaletten greift und auf die Versandpaletten umsetzt. Durch das über geeignete Steuerungen nach dem Stand der Technik mögliche Zusammenspiel von Regalbediengerät(en) und Kommissionierroboter(n) können artikelreine Lagerpaletten mit dem Regalbediengerät in optimaler Reihenfolge vom Kommissionierlager direkt auf die Abstellplätze in der Kommissionierzelle und von dort wieder in den Lagerbereich umgesetzt werden. Fertige Versandpaletten können mit dem Regalbediengerät ausgelagert oder direkt an der Regalaussenseite entnommen werden.

Der praktische Betrieb einer solchen Ausführungsform der Lageranlage lässt sich so gestalten, dass im Kommissionierlager vorwiegend Artikel mit hohen Absatzraten, sogenannte Bestsellerartikel, gelagert werden, und zwar im Hinblick darauf, dass in der Praxis die Versandpaletten in vielen Fällen zum überwiegenden Teil aus Bestsellerartikeln bestehen, die nur einen geringen Anteil am Artikelsortiment ausmachen. Auch für den Fall, dass das die Kommissionierzelle enthaltende Kommissionierlager einen vom Hauptlager getrennten Baukörper darstellt, bietet eine solche Lösung den Vorteil, dass zwischen dem Hauptlager und der Kommissionieranlage nur verhältnismässig wenig Materialbewegungen erforderlich sind.

Die Anordnung kann aber auch so getroffen sein, dass die Kommissionierzelle mit einer entlang der Abstellplätze für die Lagereinheiten verschiebbaren Plattform versehen ist, welche wenigstens einen Abstellplatz für einen Ladungsträger zur Bildung einer Versandeinheit aufweist und welche mit einem mehrachsigen Schwenkarm-Roboter ausgerüstet ist.

In der Zeichnung sind Ausführungsbeispiele der erfindungsgemässen Lageranlage dargestellt, und zwar zeigen:
- Fig. 1: einen Grundriss einer einfachen Hochregal-Lageranlage;
- Fig. 2: einen Querschnitt der Lageranlage nach der Linie II-II in Fig. 1, in grösserem Massstab;
- Fig. 3: einen Grundriss einer ähnlichen, etwas erweiterten Hochregal-Lageranlage;
- Fig. 4: einen Querschnitt der Lageranlage nach der Linie IV-IV in Fig. 3, in grösserem Massstab.
- Fig. 5: einen Grundriss einer Hochregal-Lageranlage mit abgeänderter Ausrüstung der Kommissionierzelle;
- Fig. 6: einen Teilquerschnitt der Lageranlage nach der Linie VI-VI in Fig. 5, in grösserem Massstab.

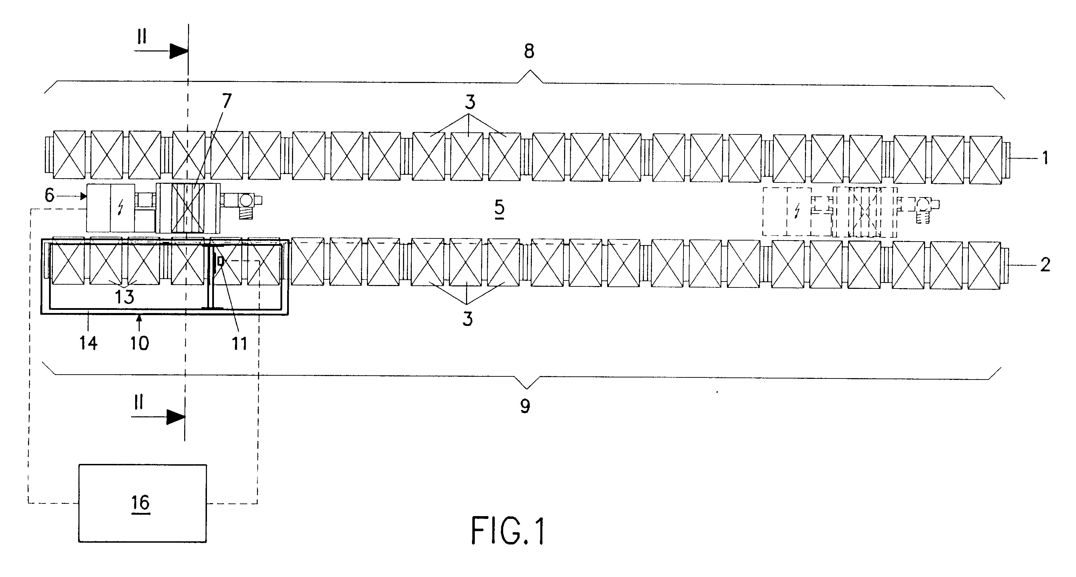

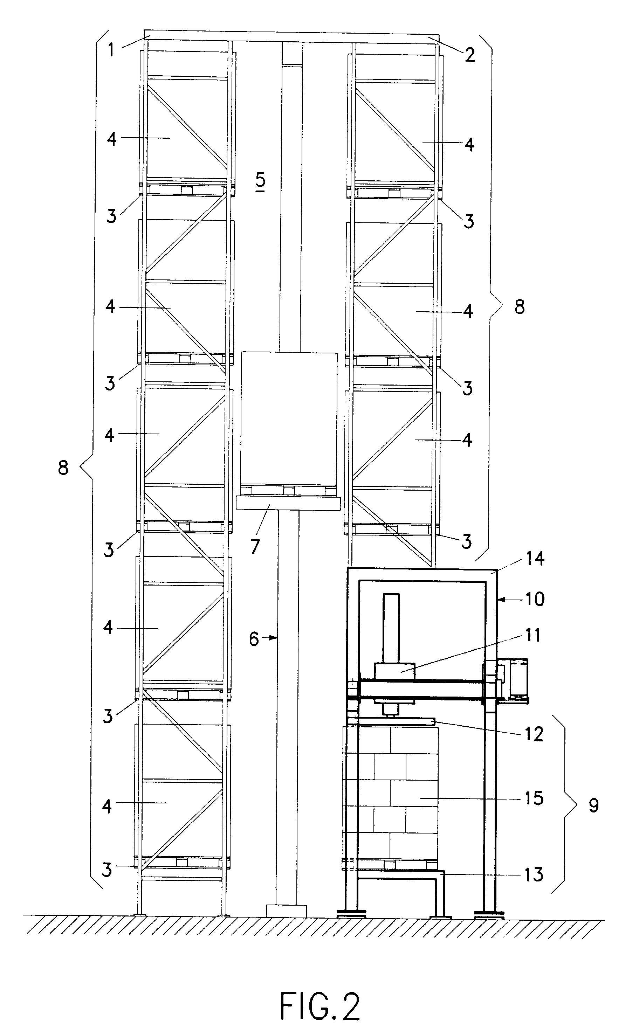

Die in den Fig. 1 und 2 dargestellte Hochregal-Lageranlage besteht aus zwei Regalgestellen 1 und 2, welche in Längsrichtung parallel zueinander verlaufen. Beide Regalgestelle 1 und 2 weisen eine Vielzahl von Abstellplätzen 3 zur Aufnahme von Lagerpaletten 4, d.h. von mit Paletten versehenen Lagereinheiten, auf. Die Regaltiefe bietet im vorliegenden Beispiel nur Raum für jeweils einen Abstellplatz 3. Selbstverständlich könnten die Lagergestelle 1 und 2 auch in die Regaltiefe sich erstreckende Gassen zur Aufnahme jeweils mehrerer Lagerpaletten 4 aufweisen. Zwischen den beiden Regalgestellen 1 und 2 befindet sich ein freier Raum 5, in welchem ein selbsttätig arbeitendes, ferngesteuertes Regalbediengerät 6 an sich bekannter Art verkehrt. Dieses verfügt über eine Transfereinrichtung 7 zum Ein- und Auslagern der Lagerpaletten 4. Sämtliche Abstellplätze 3 sind mit der Transfereinrichtung 7 des Regalbediengeräts 6 zugänglich. In Fig. 2 ist das Regalbediengerät 6 nur schematisch, d.h. ohne die Bewegungsmittel dargestellt.

Die Lageranlage ist aufgeteilt in ein Hauptlager 8 zur Aufnahme von das ganze Artikelsortiment umfassenden artikelreinen Lagerpaletten 4 und in ein Kommissionierlager 9 zur Aufnahme von aus dem Hauptlager 8 zu entnehmenden Lagerpaletten, deren Artikel für bevorstehende Kommissionierungen bestimmt sind. Das Kommissionierlager 9 umfasst beispielsweise die ganze unterste Reihe von Abstellplätzen 3 im Regalgestell 2, während das Hauptlager 8 alle übrigen Abstellplätze 3 beider Regalgestelle 1 und 2 umfasst.

In das Kommissionierlager 9 ist eine Kommissionierzelle 10 eingebaut, welche einen Kommissionierroboter 11 in Form eines Flächenportalroboters mit einem Greifer 12 aufweist, dessen Aktionsbereich im vorliegenden Beispiel-sechs Abstellplätze 13 umfasst, welche auch im Arbeitsbereich des Regalbediengeräts 6 liegen. Im baulichen Bereich der Kommissionierzelle 10 stützt sich das Regalgestell 2 auf dem Stützportal 14 des Kommissionierroboters 11 ab. Innerhalb der Kommissionierzelle 10 können beispielsweise vier Abstellplätze 13 für je eine Lagerpalette 4 und zwei Abstellplätze 13 für je eine Kommissionierpalette 15 vorgesehen sein, wobei die beiden Kommissionierpaletten z.B. je zwischen zwei Lagerpaletten gebildet werden. Im übrigen ist die Anordnung so getroffen, dass der Bewegungsbereich des Kommissionierroboters 11 von dem Bewegungsbereich Regalbediengeräts 6 getrennt ist, so dass Regalbediengerät und Kommissionierroboter ohne gegenseitige Behinderung gleichzeitig tätig sein können. Zu diesem Zweck ist der Kommissionierroboter 11 so eingerichtet, dass sein Greifer 12 die räumlichen Grenzen des Stützportals 14 seitlich nicht überfahren kann.

Das Kommissionierlager 9 wird aus dem Hauptlager 8 vorzugsweise mit Lagerpaletten 4 belegt, welche Artikel enthalten, die aufgrund vorliegender Kommissionieraufträge über einen absehbaren Zeitraum am häufigsten abzurufen sind. Dabei handelt es sich vorwiegend um sogenannte Bestsellerartikel. In die Kommissionierzelle 10 gelangen einige Lagerpaletten 4 mit Bestsellerartikeln aus dem Kommissionierlager 9 und z.B. eine Lagerpalette 4 mit seltener verlangten Artikeln aus dem Hauptlager 8. Mit Hilfe des Kommissionierroboters 11 werden diesen Lagereinheiten Artikel entnommen und auf den Kommissionierpaletten 15 zur Bildung von Versandeinheiten zusammengetragen. Die Lagerpaletten 4 werden mit Hilfe des Regalbediengeräts 6 in einer bestimmten Reihenfolge der Kommissionierzelle 10 zugeführt, wobei die nicht mehr benötigten, aber noch belegten Lagerpaletten 4 in den Lagerbereich des Hauptlagers 8 bzw. des Kommissionierlagers 9 zurückgeführt und gegebenenfalls durch Lagerpaletten 4 mit anderen Artikeln ersetzt werden. Frei werdende Abstellplätze 3 im Kommissionierlager 9 werden laufend durch volle Lagerpaletten 4 aus dem Hauptlager 8 neu belegt. Eine schematisch dargestellte zentrale Steuereinrichtung 16, an welche das Regalbediengerät 6 und der Kommissionierroboter 11 angeschlossen sind, sorgt dafür, dass alle Umlagerungs- und Kommissioniervorgänge automatisch ablaufen. Das Hauptlager 8 und das Kommissionierlager 9 bilden somit sowohl eine bauliche als auch eine betriebliche Einheit.

Die fertigen Versandpaletten können vom Regalbediengeräts 6 übernommen und an der Stirnseite der Regalgestelle 1 und 2 abgeliefert oder an der Aussenseite der Kommissionierzelle 10 mit Hilfe geeigneter Fördermittel (nicht dargestellt) entnommen werden.

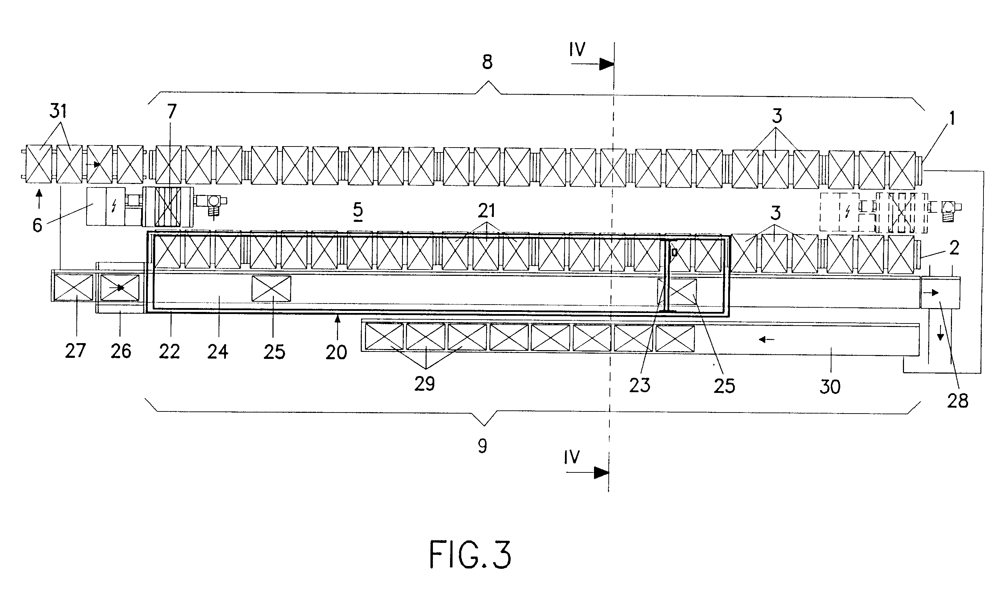

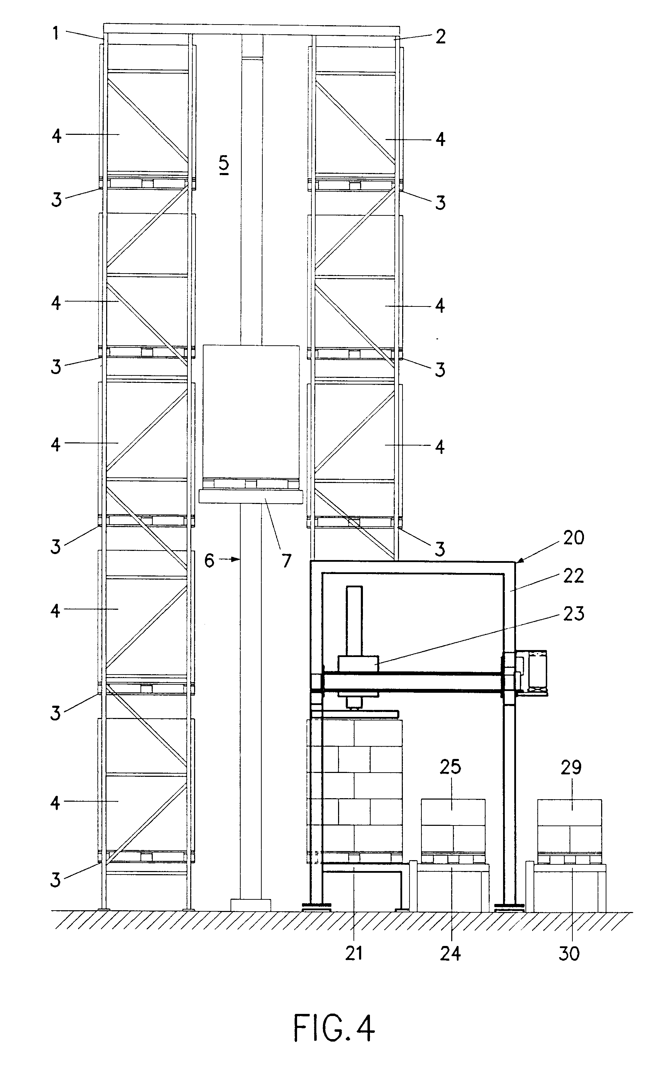

Die Fig. 3 und 4 zeigen eine Hochregal-Lageranlage, die im Prinzip gleich aufgebaut ist wie die im zuvor beschriebenen Beispiel. Dementsprechend sind gleiche Teile mit gleichen Bezugszeichen versehen.

Bei dieser Lageranlage ist das Kommissionierlager 9 ebenfalls im unteren Lagerbereich angeordnet. Die eingebaute Kommissionierzelle 20 umfasst jedoch in diesem Ausführungsbeispiel mit den z.B. achtzehn Abstellplätzen 21 einen wesentlichen Teil der Abstellplätze des Kommissionierlagers 9. Auf diese Weise lassen sich wesentlich nehr Lagerpaletten 4 mit Bestsellerartikeln unmittelbar in der Kommissionierzelle 20 stapeln, so dass für diese Lagerpaletten der Umweg über die anderen Abstellplätze 3 des Kommissionierlagers 9 entfallen kann. Die Kommissionierzelle könnte auch sämtliche Abstellplätze des Kommissionierlagers umfassen, oder es könnten mehrere Kommissionierzellen, d.h. mehr als ein Kommissionierroboter innerhalb Kommissionierlager vorgesehen sein. Andererseits können auch mehrere Kommissionierlager mit je einer Kommissionierzelle an verschiedenen Orten der gesamten Lageranlage eingerichtet sein.

Das Stützportal 22 des Kommissionierroboters 23 ist bezüglich der Regaltiefe verbreitert und dadurch der Aktionsbereich des Kommissionierroboters 23 auf eine schematisch angedeutete Förderbahn 24 ausgedehnt, auf welcher die Kommissionierpaletten 25 transportiert und bereitgestellt werden. Am Eingangsende der Förderbahn 24 ist eine Fördereinrichtung 26 für die Zufuhr von als Kommissionierpaletten bestimmten Leerpaletten 27 vorgesehen, während am Ausgangsende der Förderbahn 24 eine weitere Fördereinrichtung 28 die fertigen Versandpaletten 29 übernimmt und auf eine Abholrampe 30 schiebt. Schliesslich können Fördermittel vorgesehen sein, welche der Lageranlage von aussen zugeführte Lagerpaletten 31 in den Aktionsbereich des Regalbediengeräts 6 heranfahren. Sämtliche Fördereinrichtungen sind wiederum mit einer hier nicht dargestellten zentralen Steuereinrichtung verbunden, um mit geeigneten Steuerprogrammen einen vollautomatischen Betrieb der Lageranlage zu erzielen.

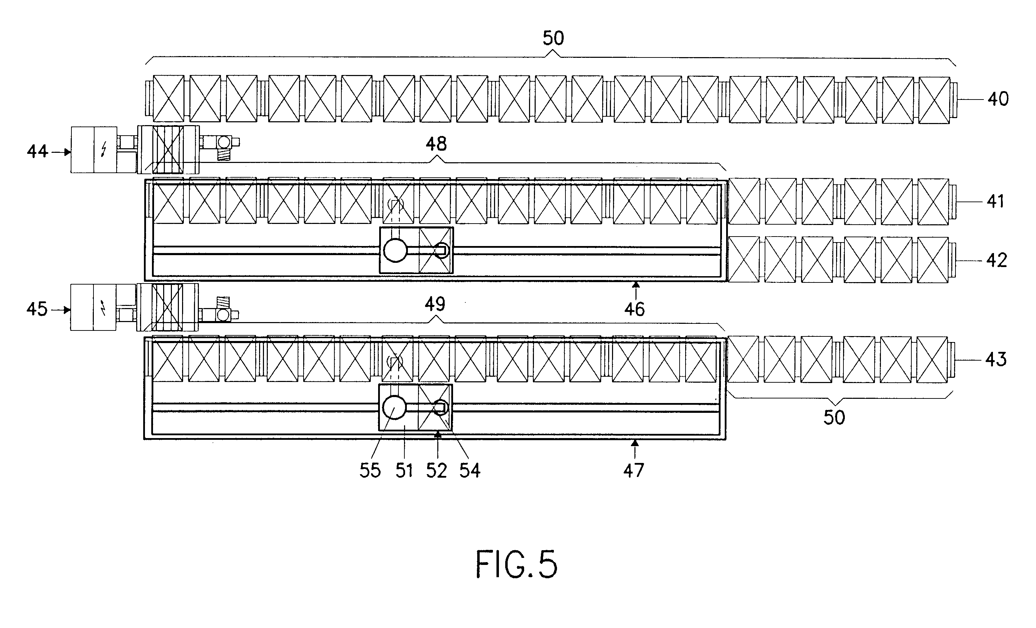

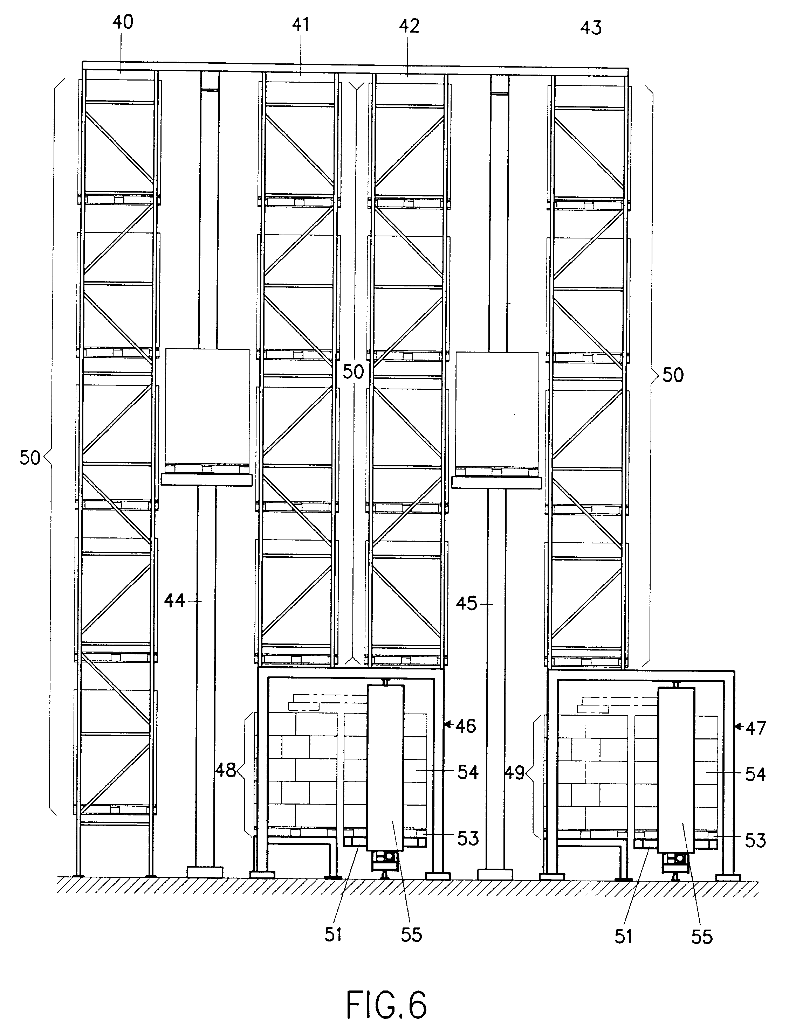

In den Fig. 5 und 6 ist schliesslich eine Hochregal-Lageranlage dargestellt, welche sich von den zuvor beschriebenen Ausführungsbeispielen im wesentlichen nur durch eine andere Ausrüstung der Kommisionierzelle unterscheidet.

Die Lageranlage umfasst im vorliegenden Beispiel vier Regalgestelle 40 bis 43, welche in gleicher Weise aufgebaut und paarweise mit einem Regalbediengerät 44 bzw. 45 ausgerüstet sind, wie das die Fig. 1 bis 4 veranschaulichen. Es sind zwei Kommissionierzellen 46 und 47 vorgesehen, die jeweils einen Teil der untersten Reihe von Abstellplätzen in den Regalgestellen 41 und 43 umfassen, wobei dieser Teil der Abstellplätze zugleich ein Kommissionierlager 48 bzw. 49 bilden. Alle Abstellplätze ausserhalb und über den Kommissionierzellen 46 und 47 bilden das Hauptlager 50.

Jede Kommissionierzelle 46 bzw. 47 ist mit einer entlang des Kommisionierlagers 48 bzw. 49 verschiebbaren Plattform 51 versehen ist, welche wenigstens einen Abstellplatz 52 für eine Kommissionierpalette 53 zur Bildung einer Versandeinheit 54 aufweist und welche mit einem mehrachsigen Schwenkarm-Roboter 55 ausgerüstet ist.

## Patentansprüche

1. Lageranlage mit einer Vielzahl von Abstellplätzen (3) zur Aufnahme von Lagereinheiten (4) und mit Transporteinrichtungen (6, 7) zum Ein- und Auslagern der Lagereinheiten (4), dadurch gekennzeichnet, dass die Lageranlage aufgeteilt ist in ein Hauptlager (8; 50) zur Aufnahme von das ganze Artikelsortiment umfassenden artikelreinen Lagereinheiten (4) und in wenigstens ein Kommissionierlager (9; 48, 49) zur Aufnahme von aus dem Hauptlager (8; 50) zu entnehmenden Lagereinheiten (4), deren Artikel für bevorstehende Kommissionierungen bestimmt sind.

2. Lageranlage nach Anspruch 1, dadurch gekennzeichnet, dass mehrere Kommissionierlager (9; 48, 49) vorgesehen sind, welche auf verschiedene Orte der Lageranlage verteilt sind.

3. Lageranlage nach einem der vorhergehenden Ansprüche, dadurch gekennzeichnet, dass jedem Kommissionierlager (9; 48, 49) eine Einrichtung zur Bildung von Versandeinheiten zugeordnet ist.

4. Lageranlage nach Anspruch 3, dadurch gekennzeichnet, dass die Einrichtung zur Bildung von Versandeinheiten wenigstens eine selbsttätig arbeitende Kommissionierzelle (10; 20; 46, 47) aufweist, welche Abstellplätze (13; 52) zur Aufnahme wenigstens einer Lagereinheit und zur Bildung wenigstens einer Versandeinheit (29; 54) aufweist und in welcher mit Hilfe eines Kommissionierroboters (11; 55) den zugeführten Lagereinheiten Artikel entnommen und zur Bildung von Versandeinheiten zusammengetragen werden.

5. Lageranlage nach Anspruch 4, dadurch gekennzeichnet, dass die Kommissionierzelle (10; 20; 46, 47) in das Kommissionierlager (9; 48, 49) eingebaut ist.

6. Lageranlage nach Anspruch 5, dadurch gekennzeichnet, dass die Kommissionierzelle (10; 20; 46, 47) wenigstens einen Teil der Abstellplätze des Kommissionierlagers (9; 48, 49) umfasst.

7. Lageranlage nach einem der Ansprüche 4 bis 6, dadurch gekennzeichnet, dass die Kommissionierzelle (10; 20) mit einem Portalroboter (11; 23), insbesondere mit einem Flächenportalroboter ausgerüstet ist.

8. Lageranlage nach einem der Ansprüche 4 bis 6, dadurch gekennzeichnet, dass die Kommissionierzelle (46, 47) mit einer entlang der Abstellplätze für die Lagereinheiten verschiebbaren Plattform (51) versehen ist, welche wenigstens einen Abstellplatz (52) für einen Ladungsträger zur Bildung einer Versandeinheit (54) aufweist und welche mit einem mehrachsigen Schwenkarm-Roboter (55) ausgerüstet ist.

9. Lageranlage nach einem der vorhergehenden Ansprüche, dadurch gekennzeichnet, dass das Hauptlager (8; 50) und das Kommissionierlager (9; 48, 49) eine bauliche und betriebliche Einheit bilden.

10. Lageranlage nach Anspruch 9, in Hochregalbauweise, dadurch gekennzeichnet, dass das Lagerregal des Kommissionierlagers in das Lagerregal des Hauptlagers baulich integriert ist.

11. Lageranlage nach den Ansprüchen 4 und 9, dadurch gekennzeichnet, dass das Hauptlager (8; 50), das Kommissionierlager (9; 48, 49) und die Kommissionierzelle (10; 20; 46, 47) gemeinsame Transporteinrichtungen (6; 44, 45) zum Ein- und Auslagern der Lagereinheiten aufweisen.

12. Lageranlage nach den Ansprüchen 10 und 11, dadurch gekennzeichnet, dass die Transporteinrichtungen wenigstens ein selbsttätig arbeitendes Regalbediengerät (6: 44, 45) aufweisen.

13. Lageranlage nach den Ansprüchen 4 und 12, dadurch gekennzeichnet, dass eine gemeinsame Steuerzentrale (16) für den Betrieb aller vorhandener Regalbediengeräte (6; 44, 45) und Kommissionierroboter (11; 23; 55) vorhanden ist.

14. Lageranlage nach einem der Ansprüche 4 bis 6, dadurch gekennzeichnet, dass die Kommissionierzelle (10; 20; 46, 47) im unteren Lagerbereich der Lageranlage angeordnet ist.

15. Lageranlage nach den Ansprüchen 7, 10 und 14, dadurch gekennzeichnet, dass das Lagergerüst im Bereich der Kommissionierzelle (10; 20; 48, 49) unmittelbar auf dem Stützportal (14; 22) des Kommissionierroboters (11; 23; 55) abgestützt ist.

16. Lageranlage nach den Ansprüchen 4 und 12, dadurch gekennzeichnet, dass die in der Kommissionierzelle (10; 20; 46, 47) vorhanden Abstellplätze (13; 21; 52) für die Lagereinheiten im Arbeitsbereich des Regalbediengeräts (6; 44) angeordnet sind.

17. Lageranlage nach Anspruch 16, dadurch gekennzeichnet, dass der Bewegungsbereich des Kommissionierroboters (11; 23; 55) von dem Bewegungsbereich des Regalbediengeräts (6; 44) getrennt ist.

18. Lageranlage nach Anspruch 4, dadurch gekennzeichnet, dass der Kommissionierzelle Mittel für die Zufuhr leerer, zur Bildung von Versandeinheiten bestimmter Ladungsträger aufweist.
